**Europäisches Patentamt**

**European Patent Office**

**Office européen des brevets**

(19)

(11) Veröffentlichungsnummer: **0 128 134**
**B1**

(12) # EUROPÄISCHE PATENTSCHRIFT

(45) Veröffentlichungstag der Patentschrift:
**23.11.88**

(51) Int. Cl.⁴: **B 29 C 63/00**

(21) Anmeldenummer: **84890104.7**

(22) Anmeldetag: **01.06.84**

(54) **Querspritzkopf zur Kabelummantelung.**

(30) Priorität: **01.06.83 AT 2015/83**

(43) Veröffentlichungstag der Anmeldung:
**12.12.84 Patentblatt 84/50**

(45) Bekanntmachung des Hinweises auf die Patenterteilung:
**23.11.88 Patentblatt 88/47**

(84) Benannte Vertragsstaaten:
**AT CH DE FR GB LI**

(56) Entgegenhaltungen:
**FR-A-2 357 042**
**US-A-2 943 351**

(73) Patentinhaber: **Rosendahl Maschinen Gesellschaft m.b.H., Südstadtzentrum 2, A-2246 Maria Enzersdorf- Südstadt (AT)**

(72) Erfinder: **Kertscher, Eberhard, Les Saules, CH- 1462 Yuonand (CH)**

(74) Vertreter: **Gibler, Ferdinand, Dipl.Ing.Dr.tech., Dorotheergasse 7/14, A-1010 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 128 134 B1

**Beschreibung**

Die Erfindung betrifft einen Querspritzkopf für Kabelummantelungen mit einer Drahtführung und einer dazu konzentrischen Düse, bei der ein Halter vorgesehen ist, der eine größere, zylindrische und eine weitere, kleinere Aufnahmebohrung aufweist, in denen eine Düse bzw. ein Dorn eingesetzt sind, zwischen deren einander zugekehrten kegeligen Stirnflächen ein Ringspalt vorgesehen ist, in den im Übergangsbereich dieser Aufnahmebohrungen angeordnete Durchlässe für ein plastifiziertes Material münden.

Ein solcher Querspritzkopf wurde z. B. durch die FR-PS-2 357 042 bekannt. Bei dieser Lösung sitzt der Dorn in einer konischen Bohrung der Pinole und die Düse in einer zylindrischen Bohrung, wobei die Düse an ihrer Außenseite eine Schulter aufweist, die an einer Gegenschulter des Gehäuses abgestützt ist, sodaß diese in Ausströmrichtung der plastifizierten Massen abgestützt ist.

Der Nachteil dieser Lösung besteht darin, daß die Pinole und der in diesen eingesetzte Dorn aufgrund der konischen Bohrung extrem genau gefertigt werden müssen. Doch trotz einer sehr genauen Fertigung, die einen entsprechend großen Aufwand erfordert, ist es bei der bekannten Lösung kaum möglich die Position der Düse in Bezug auf den Dorn mit einigem Genauigkeit einzuhalten, wodurch sich die Größe des im Bereich vor der Düse gelegenen Ringspaltes bei einem Austausch des Dornes oder der Düse entsprechend ändert und sich aus diesem Grunde entsprechend verschiedene Widerstände für das zuströmende plastifizierte Material ergeben. Dabei ist noch zu berücksichtigen, daß die konische Bohrung einen sehr kleinen Konuswinkel aufweist, sodaß sich kleine Änderungen im Durchmesser sehr stark auf den Spalt zwischen dem Dorn und der Düse auswirken. Dies führt zu Schwierigkeiten bei einem Austausch des Dornes oder der Düse den vorgesehenen Ringspalt mit der erwünschten Genauigkeit einzuhalten.

Ziel der Erfindung ist es diese Nachteile zu vermeiden und einen Querspritzkopf der eingangs erwähnten Art vorzuschlagen, bei dem die Einhaltung eines bestimmten Ringspaltes zwischen dem Dorn und der Düse auf einfache Weise sichergestellt ist.

Erfindungsgemäß wird dies dadurch erreicht, daß der Halter in eine Pinole einschraubbar ist und die Aufnahmebohrungen als zwei konzentrische zylindrische Innenbohrungen ausgebildet sind, wobei die innerhalb der Pinole befindliche kleinere Aufnahmebohrung zur Aufnahme des Dornes und die außerhalb der Pinole befindliche größere Aufnahmebohrung zur Aufnahme der Düse vorgesehen sind, zwischen welchen Bohrungen mindestens eine als Anschlag für den Dorn dienende Schulter angeordnet ist.

Mit einer derartigen Ausbildung ist unter Beibehaltung der erforderlichen Festigkeit auf relativ einfache Weise eine feste Zentrierung von Dornführung und Düse gegeben. Dabei ist in besonders vorteilhafter Weise der gesamte Werkzeugeinsatz lediglich durch Einschrauben in die Pinole positioniert, wobei aufwendige Einstellarbeiten überflüssig sind; seine Fixierung am Werkzeugkopf erfolgt durch eine Mutter, die so weit angezogen wird, bis Dichtigkeit an einem anschließenden Drosselring gewährleistet ist. Für einen Dimensionswechsel muß daher vorteilhafterweise lediglich diese Mutter entfernt werden, wodurch der gesamte Werkzeugeinsatz ohne Demontage aus der Pinole herausgeschraubt werden kann. Auch bestehende Querspritzköpfe können in einfacher Weise umgerüstet werden, indem die bestehende Drahtführung aus der Pinole entfernt und der erfindungsgemäß ausgebildete Halter mit Dorn und Düse in die Pinole geschraubt wird.

Auf diese Weise ist auch eine exakte gleichmäßige Wandstärke der Kabelummantelung erzielbar und auch bestehende Querspritzköpfe können einfach nachträglich umgerüstet werden.

Eine vorteilhafte Weiterbildung der Erfindung besteht darin, daß an der Außenseite des die größere Innenbohrung aufweisenden Teiles des Halters ein Anschlußverteiler angeordnet ist, der unter Bildung eines Zwischenraumes zur Aufnahme eines Abschnittes der Pinole in Richtung zu dieser verlängert ausgebildet ist und eine zur Pinolenlängsrichtung vertikale Anschlagsfläche zur Ausübung einer axialen Anpreßkraft aufweist. Eine derartige Ausbildung ermöglicht eine störungsfreie Halterung der von der Pinole abstehenden Düse, sodaß jedwede Möglichkeit einer Störung der Konzentrizität, beispielsweise durch äußere mechanische Einwirkungen auf das Düsenende zuverlässig ausgeschlossen ist.

Schließlich ist eine weitere Ausführungsform der Erfindung dadurch gekennzeichnet, daß die beiden jeweils einen unterschiedlichen Innendurchmesser aufweisenden Teile des Halters durch 3 - 12 jeweils ein kreisförmiges Segment zum Materialdurchlaß begrenzende Stege miteinander verbunden sind, wodurch - in Abhängigkeit des Durchmessers - bei minimaler Störung des Masseflusses die beiden jeweils einen unterschiedlich großen Innendurchmesser aufweisenden Teile des Halters exakt in Position haltbar sind.

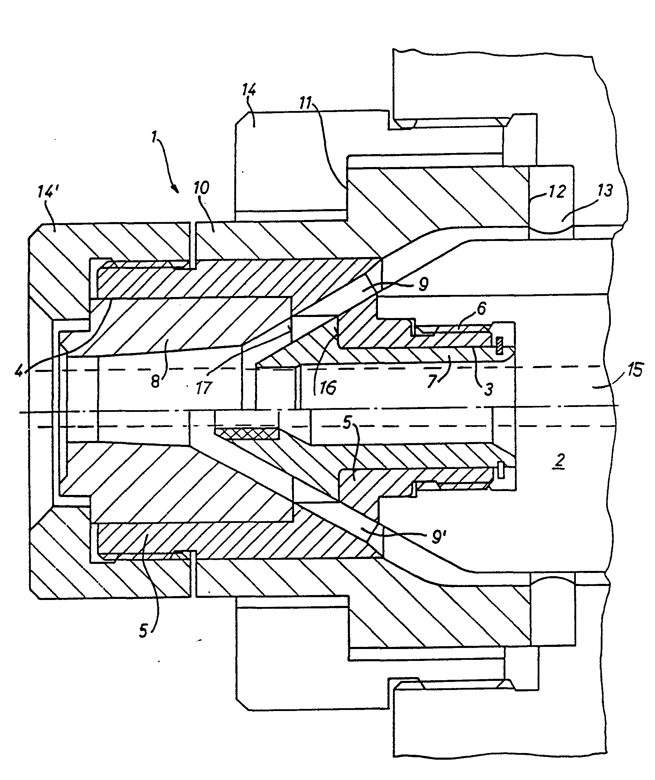

Die Erfindung wird im folgenden an Hand eines in der Zeichnung dargestellten Ausführungsbeispieles näher beschrieben.

Der nur zum Teil ersichtliche Querspritzkopf 1 weist eine sich in Kabellangsführung erstreckende Pinole 2 auf, in die ein zwei unterschiedlich große Innenbohrungen 3, 4 aufweisender, zylindrisch ausgebildeter Halter 5 über ein Gewinde 6 eingeschraubt ist. Die beiden Innenbohrungen 3, 4 sind konzentrisch ausgebildet, wobei die kleinere, in der Pinole 2 befindliche Innenbohrung 3 zur Aufnahme eines Dornes 7 und die größere Innenbohrung 4 zur Aufnahme einer Düse 8 ausgebildet ist. Im Bereich des Durchmesserwechsels sind die beiden Teile des Halters 5 unter Bildung von Materialdurchlässen 9 durch Stege 9' miteinander verbunden, deren Anzahl sich mit zunehmendem Durchmesser erhöht. Weiters befinden sich zwischen den Innenbohrungen 3, 4 zwei Schultern 16, 17, von denen die Schulter 16 als Anlagefläche für den Dorn 7 und die Schulter 17 als Anlagefläche für die Düse 8 dient.

An der Außenfläche des die größere Innenbohrung 4 aufweisenden Halterteiles ist ein Anschlußverteiler 10 angeordnet, der - unter Bildung eines Zwischenraumes für den Materialdurchfluß - über einen Teil der Pinole 2 verlängert ausgebildet ist. Dieser Anschlußverteiler 10 weist zwei zur Pinolenlängsrichtung quer verlaufende Anschlagflächen 11, 12 auf, wobei die vordere zur Anlage an einen Drosselring 13 und die hintere Anschlagfläche zur Auflage einer auf das Werkzeug schraubbaren Mutter 14 vorgesehen ist. Die in der Innenbohrung 4 befindliche Düse 8 wird durch eine auf den Halter 5 aufschraubbare Mutter 14' fixiert.

Mit strichlierten Linien ist ein zu ummantelndes Kabel 15 dargestellt, das durch Pinole 2, Dorn 7 und Düse 8 des Querspritzkopfes 1 durchgeführt wird.

Ein derartig ausgebildeter Werkzeugverteilereinsatz ist durch einfaches Einschrauben in die Pinole 2 ohne jedwede Einstellarbeit positioniert. Die Fixierung am Werkzeugkopf erfolgt durch eine Mutter 14, die so weit festgezogen wird, bis die Dichtigkeit am Drosselring 13 gewährleistet ist. Muß ein Dimensionswechsel vorgenommen werden, so ist lediglich die Entfernung der Mutter 14 erforderlich, wodurch der gesamte Einsatz ohne Demontage aus der Pinole 2 herausgeschraubt werden kann.

## Patentansprüche

1. Querspritzkopf für Kabelummantelungen mit einer Drahtführung und einer dazu konzentrischen Düse, bei der ein Halter vorgesehen ist, der eine größere, zylindrische und eine weitere, kleinere Aufnahmebohrung aufweist, in denen eine Düse bzw. ein Dorn eingesetzt sind, zwischen deren einander zugekehrten kegeligen Stirnflächen ein Ringspalt vorgesehen ist, in den im Übergangsbereich dieser Aufnahmebohrungen angeordnete Durchlässe für ein plastifiziertes Material münden, dadurch gekennzeichnet, daß der Halter (5) in eine Pinole (2) einschraubbar ist und die Aufnahmebohrungen (3, 4) als zwei konzentrische zylindrische Innenbohrungen ausgebildet sind, wobei die innerhalb der Pinole (2) befindliche kleinere Aufnahmebohrung (3) zur Aufnahme des Dornes (7) und die außerhalb der Pinole (2) befindliche größere Aufnahmebohrung (4) zur Aufnahme der Düse (8) vorgesehen sind, zwischen welchen Bohrungen (3, 4) mindestens eine als Anschlag für den Dorn (7) dienende Schulter (16) angeordnet ist.

2. Querspritzkopf nach Anspruch 1, dadurch gekennzeichnet, daß an der Außenseite des die größere Innenbohrung (4) aufweisenden Teils des Halters (5) ein Anschlußverteiler (10) angeordnet ist, der unter Bildung eines Zwischenraumes zur Aufnahme eines Abschnittes der Pinole (2) in Richtung zu dieser verlängert ausgebildet ist und eine zur Pinolenlängsrichtung vertikale Anschlagfläche (11) zur Ausübung einer axialen Anpreßkraft aufweist.

3. Querspritzkopf nach Anspruch 1 oder 2, dadurch gekennzeichnet, daß die beiden jeweils einen unterschiedlichen Innendurchmesser aufweisenden Teile des Halters (5) durch 3 - 12 jeweils ein kreisförmiges Segment zum Materialdurchlaß begrenzende Stege (9') miteinander verbunden sind.

## Claims

1. Cross head for cable sheathings having a wire guide and a die concentric thereto, with which a holder is provided which has a larger, cylindrical receiving bore and another, smaller receiving bore, in which a die or a mandrel is inserted, between the conical ends of which, facing each other, an annular gap is provided, into which there open passages, arranged in the transition region of these receiving bores, for a plasticized material, characterized in that the holder (5) can be screwed into a torpedo (2) and the receiving bores (3, 4) are designed as two concentric cylindrical inner bores, the smaller receiving bore (3), inside the torpedo (2), being intended to receive the mandrel (7) and the larger receiving bore (4), outside the torpedo (2), being intended for receiving the die (8), between which bores (3, 4) at least one shoulder (16) is arranged, serving as a stop for the mandrel (7).

2. Cross head according to claim 1, characterized in that, on the outside of the part of the holder (5) having the larger inner bore (4), there is arranged a manifold (10), which is designed as extended in the direction of the torpedo (2), forming an intermediate space for receiving a section of said torpedo, and has a stop surface (11), vertical to the longitudinal direction of the torpedo, for exerting an axial contact force.

3. Cross head according to claim 1 or 2, characterized in that the two parts of the holder (5), each having a different internal diameter, are interconnected by 3 - 12 webs (9'), in each case bounding a circular segment for material passage.

**Revendications**

1. Tête d'équerre pour enrobage de câbles comprenant un conduit de câble et, concentrique à ce conduit, une tuyère, dont le support présente deux orifices de réception, un large cylindrique et, dans le prolongement, un second plus petit dans lesquels sont installées une tuyère et une buse respectivement dont les faces coniques engagées l'une dans l'autre présentent entre elles une ouverture circulaire dans laquel le débouche, au niveau du raccordement de ces orifices de réception, une série de passages pour matière plastique, caractérisée en ce que le support (5) est vissable dans un manchon (2), et en ce que les orifices de réception (3, 4) se présentent sous la forme de deux orifices intérieurs cylindriques concentriques dont le plus petit (3) situé à l'intérieur du manchon (2) est prévu pour recevoir la buse, dont le plus large (4) situé à l'extérieur du manchon (2) est prévu pour recevoir la tuyère, et entre lesquels orifices (3, 4) est arrangé au moins un épaulement (16) pour la buse (7).

2. Tête d'équerre pour enrobage de câbles selon la revendication 1, caractérisée en ce qu'un élément de raccord (10) est prévu à l'extérieur de la partie du support contenant le plus large orifice de réception, cet élément étant formé de telle sorte qu'il crée une chambre intérieure recevant une partie de l'extrémité du manchon et cet élément présentant une façade verticale par rapport à l'axe longitudinal du manchon pour y subir une force de compression axiale.

3. Tête d'équerre pour enrobage de câbles selon la revendication 1, caractérisée en ce que les deux parties du support (5), présentant respectivement un diamètre intérieur différent, sont reliées par 3 à 12 ponts (9') délimitant entre eux des conduits circulaires pour le passage de matière.